Europäisches Patentamt

European Patent Office

Office européen des brevets

(19)

(11) Numéro de publication : **0 350 367 B1**

## FASCICULE DE BREVET EUROPEEN

(12)

(45) Date de publication du fascicule du brevet :
**15.01.92 Bulletin 92/03**

(51) Int. Cl.⁵ : **B01J 29/06,** C07C 5/27,
C07C 6/12, C07C 15/02

(21) Numéro de dépôt : **89401817.5**

(22) Date de dépôt : **26.06.89**

(54) **Procédé de transformation du durène dans un mélange d'hydrocarbures de point d'ébullition compris entre 30 et 300 degrés C.**

(30) Priorité : **04.07.88 FR 8809129**

(43) Date de publication de la demande :
**10.01.90 Bulletin 90/02**

(45) Mention de la délivrance du brevet :
**15.01.92 Bulletin 92/03**

(84) Etats contractants désignés :
**DE GB IT NL SE**

(56) Documents cités :
**EP-A- 0 091 727**
**DD-A- 137 704**
**FR-A- 2 040 156**
**FR-A- 2 140 738**
**FR-A- 2 367 533**
**US-A- 3 912 659**
**US-A- 4 347 397**

(73) Titulaire : **INSTITUT FRANCAIS DU PETROLE**
**4, Avenue de Bois-Préau**
**F-92502 Rueil-Malmaison (FR)**

(72) Inventeur : **Travers, Christine**
**12, Bd du Général De Gaulle**
**F-92500 Rueil Malmaison (FR)**
Inventeur : **Raatz, Francis**
**10, Allée Jacques Prévert**
**F-78260 Achères (FR)**
Inventeur : **Marcilly, Christian**
**91 ter rue Condorcet**
**F-78800 Houilles (FR)**
Inventeur : **Juguin, Bernard**
**46, avenue du Stade**
**F-92500 Rueil Malmaison (FR)**

## Description

La présente invention concerne un procédé de transformation par transalkylation, dismutation et isomérisation d'une quantité substantielle de durène ou 1.2.4.5 tétraméthylbenzène contenu dans un mélange d'hydrocarbures sur catalyseur zéolithique.

Le durène est présent, par exemple dans les essences issues de la transformation du méthanol. Ce produit est solide à température ambiante (T° fusion = 79,2°C, T° ébullition = 196,8°C). L'incorporation directe de l'essence ex méthanol, qui peut contenir plus de 10% de durène en poids, par exemple de 10 à 50%, dans les réservoirs de stockage d'essence (pool essence) pose un problème difficile à résoudre en raison de la présence de cristaux, qui entraînent le bouchage des carburateurs d'automobiles.

La transformation du durène peut être effectuée par différentes voies qui sont l'isomérisation, la transalkylation avec du benzène, du toluène, la déalkylation et l'hydrogénation, la dernière solution étant la moins intéressante dans l'optique d'une incorporation au réservoir de stockage essence. Les brevets EP 091727, US 4304951, US 4347397 ont montré que toutes ces réactions (hors hydrogénation) étaient réalisables sur des solides acides types ZSM5, ZSM11, ZSM12, et ZSM35 possédant de faibles quantités d'un métal hydrogénant tel que le platine ou le nickel, moyennant des conditions opératoires différentes suivant la réaction que l'on veut privilégier.

Dans les brevets DD 137704 A et DD 137703 A, il est réalisé l'isomérisation de l'isodurène ou 1.2.3.5 tétraméthylbenzène et du prehnitène ou 1.2.3.4 tétraméthylbenzène en durène respectivement sur une mordénite de rapport atomique Si/Al de 6 à 7,5, contenant de 4 à 7% poids de Ni, et sur une zéolithe Y contenant entre 0,1 et 0,2% poids de Pt à des pressions de 1 à 50 b, en présence d'$H_2$, et à des températures variant entre 150 et 300°C suivant le catalyseur utilisé.

Dans les brevets EP 0217695 et français n° 2471359 de la demanderesse, la transalkylation du toluène par les hydrocarbures C9$^+$ est réalisée en présence de catalyseurs zéolithiques à base de mordénite contenant un métal du groupe VIII et éventuellement un métal du groupe IVA.

Le dépôt de tels métaux entraîne en général une baisse de sélectivité par hydrogénation des produits aromatiques et par conséquent une perte d'indice d'octane.

L'art antérieur est par ailleurs illustré par les brevets FR-A-2.140.738, FR-A-2.367.533, US-A-3.912.659, FR-A-2.040.156.

Un premier objet de l'invention est de répondre au problème posé ci-haut.

Un autre objet de l'invention est de proposer un procédé simple permettant de récupérer à partir d'une coupe hydrocarbonée issue de la transformation du méthanol par voie catalytique, une nouvelle coupe hydrocarbonée, sensiblement débarrassée de la majeure partie du durène de façon à pouvoir l'ajouter par exemple aux essences conventionnelles dans les réservoirs de stockage et contenant des produits finis ayant une gamme de points d'ébullition commune.

Un autre objet de l'invention est de décrire un procédé permettant de conserver, voire d'améliorer l'indice d'octane de la coupe hydrocarbonée soumise audit procédé.

On a découvert de manière surprenante que le durène contenu dans une coupe hydrocarbonée (type essence ou kérosène) pouvant contenir du durène pouvait être isomérisé, dismuté et/ou transalkylé avec des xylènes en présence d'un catalyseur zéolithique. De manière plus précise, l'invention concerne un procédé de transformation essentiellement par transalkylation, dismutation et isomérisation, d'une quantité substantielle de durène contenu dans un mélange d'hydrocarbures, de point d'ébullition compris entre 30 et 300°C, dans une zone réactionnelle dans laquelle on met en contact, dans les conditions de la transformation le dit mélange avec de l'hydrogène en présence d'un catalyseur zéolithique.

Ce mélange comprend en général de 10 à 80% en poids de xylènes, et le catalyseur renferme au moins une zéolithe choisie parmi la zéolithe Y, la zéolithe oméga, la zéolithe L, la zéolithe Bêta, les zéolithes de type MFI et de type ZSM20, l'offrétite et la mordénite ; on a obtenu de très bons résultats avec la mordénite de rapport atomique global Si/Al généralement compris entre 8 et 100, et dont la teneur en sodium est inférieure à 300 ppm.

La zéolithe L de rapport atomique Si/Al généralement compris entre 3 et 50, de préférence compris entre 10 et 40 ainsi que la zéolithe Y de rapport atomique Si/Al généralement compris entre 2,5 et 50, de préférence compris entre 2,5 et 30 ont également donné des résultats tout à fait satisfaisants, surtout en ce qui concerne l'activité.

Des hydrocarbures contenant une faible quantité de durène, par exemple une quantité généralement inférieure à 10% poids et de préférence comprise entre 0,5 et 8% poids, sont récupérés de la zone réactionnelle.

Le mélange initial d'hydrocarbures ci-dessus comprend habituellement de 80 à 10% de xylènes et de 20 à 90% d'une charge initiale hydrocarbonée pouvant être une essence de point d'ébullition compris par exemple entre 30 et 205°C ou un kérosène de point d'ébullition compris entre 155°C et 300°C par exemple. Avantageusement il comprend de 45 à 65% d'une charge initiale hydrocarbonée et 55 à 35% de xylènes. La majeure partie des xylènes sont rajoutés à la charge initiale et proviennent généralement de toute unité susceptible d'en produire. La charge initiale peut contenir de 5 à 50% en poids et de préférence de 10 à 35% en poids de durène et une quantité de toluène généralement inférieure à 10% en poids et de préférence inférieure ou égale à 5% en poids. Un exemple de charge hydrocarbonée est donné dans le tableau I ci-dessous.

## TABLEAU I

### COMPOSITION DE L'ESSENCE ISSUE DE LA CONVERSION DU METHANOL

| | % poids |
|---|---|
| i.Pentane | 7,13 |
| n-Pentane | 1,24 |
| Pentènes | 20,07 |
| $C_6^+$ non aro | 22,20 |
| Benzène | 0,28 |
| Toluène | 1,61 |
| Ethylbenzène | 0,43 |
| Xylènes | 8,61 |
| $C_9^+$ aro | 6,13 |
| Durène | 32,3 |

### Indice d'octane = 96

Le procédé selon la présente invention permet d'obtenir des hydrocarbures où le durène a été transformé en composés aromatiques de point de fusion plus faible.

L'indice d'octane du mélange résultant, s'il s'agit d'une coupe essence a été sensiblement maintenu, voire amélioré.

Ne présentant sensiblement plus de substances solides à leur température d'utilisation, ces hydrocarbures obtenus sont directement incorporables dans les réservoirs de stockage.

Avec les zéolithes utilisées selon la présente invention, les réactions de craquage et d'hydrogénation sont minimisées. Des résultats sensiblement améliorés ont été obtenus avec la mordénite sous forme H convenablement modifiée du fait de son extrême stabilité aux conditions de la réaction.

Les catalyseurs de l'invention ne contiennent substantiellement pas de métaux. En général les zéolithes peuvent en contenir une quantité inférieure à 100 ppm. C'est habituellement en majorité du fer.

Les zéolithes préférées, les mordénites, susceptibles d'être utilisées comme matière de base peuvent être d'origine naturelle ou synthétique. On préférera, cependant, les zéolithes synthétiques, car elles peuvent être préparées en phase très pure avec un rapport atomique Si/Al contrôlé, variant généralement entre 5 et 25, et plus spécialement entre 5 et 15. Si la mordénite de départ contient des agents structurants organiques, on les éliminera avant tout traitement par une calcination en présence d'oxygène à 550°C par exemple, ou par toute autre technique connue dans l'art antérieur. Pour aboutir à la forme H désaluminée, il est, dans une première étape, nécessaire d'éliminer les cations non décomposables, généralement $Na^+$, présents dans la mordénite de départ. Pour ce faire, on pourra procéder à un ou des échanges dans des solutions diluées d'acides comme HCl ou dans des solutions de $NH_4^+$. Le point important est, qu'à l'issue de cette première étape que l'on peut qualifier de décationisation, la quasi totalité des cations alcalins soit éliminée. La teneur en sodium est alors généralement inférieure à 2000 ppm et de préférence inférieure à 1000 ppm. Le second point important est que le solide obtenu soit une forme H ou un précurseur de forme H (exemple $NH_4^+$) non désaluminée substantiellement (% de désalumination < 10% et de préférence < 5%). De manière préférée, on choisira comme précurseur de forme H, la forme $NH_4^+$ ; en effet, l'échange $Na^+$ $NH_4^+$ ne conduit pas à une désalumination de la charpente. Cette dernière est donc dans une forme $NH_4$ obtenue par échange, normalement exempte de défauts structuraux.

Dans une deuxième étape, la forme H ou le précurseur de forme H, peu ou pas désaluminé, est soumis à un traitement sous vapeur d'eau à une température supérieure à 480°C et, de préférence, 550 à 600°C, sous une pression partielle de vapeur d'eau généralement supérieure à 10% et plus particulièrement supérieure à 50% et de préférence supérieure à 85%. La pression partielle de vapeur d'eau élevée est un critère essentiel de la préparation, car cette pression élevée conduit à des solides dont la charpente, bien que désaluminée, est très bien recristallisée : elle contient peu de défauts. Sans se lier à une théorie particulière, on peut admettre qu'une forte pression partielle de vapeur d'eau facilite la migration de la silice, provenant de zones amorphisées, et sa réinsertion ultérieure dans les lacunes de la charpente laissées vacantes par le départ d'aluminium. A l'issue de cette deuxième étape, on obtient un solide caractérisé par la présence de zones amorphes en faible quantité, qui sont des précurseurs du réseau poreux secondaire, et par une charpente cristalline pratiquement exempte de défauts structuraux. La présence de zones amorphes, dans les zéolithes traitées à haute température sous vapeur d'eau, est un phénomène connu. Cependant, les conditions opératoires préconisées permettent de limiter au maximum la proportion de zone amorphe au sein des cristaux. Les taux de cristallinité mesurés par diffraction X sont généralement supérieurs à 80% et, plus spécifiquement, à 90%. Les solides calcinés sous vapeur d'eau sont également caractérisés par la présence, dans les micropores structuraux, d'espèces aluminiques extra réseau. Une attaque acide ultérieure est donc souhaitable, car ces micropores sont pratiquement bouchés. Cependant, pour obtenir un bon catalyseur de transformation du durène, il est préférable d'optimiser cette attaque acide.

L'attaque acide optimisée constitue la troisième étape de la préparation des catalyseurs. A ce stade, il est important de préserver ou de libérer les sites acides forts des solides. L'attaque acide devra donc être suffisamment forte pour, d'une part, éliminer les aluminiums cationiques formés lors du traitement sous vapeur d'eau, et qui sont des poisons des sites forts, et d'autre part, pour libérer la microporosité structurale. Les sites acides du type Brönsted liés aux espèces extra réseau étant de force moyenne ou faible, il n'est pas indispensable de procéder à leur totale élimination. L'attaque acide ne devra, cependant, pas être trop forte, de manière à éviter une désalumination trop importante des aluminiums de charpente. La force à retenir pour l'attaque acide dépend étroitement des caractéristiques atteintes après la calcination sous vapeur d'eau et, en particulier, de la maille cristalline. Pour des rapports Si/Al de charpente variant entre 10 et 40, on utilisera des concentrations de solutions acides (HCl, $H_2SO_4$, $HNO_3$, etc...) comprises entre 0,2 et 5 N et, de préférence, entre 1 et 3 N. Pour des rapports atomiques Si/Al de charpente supérieurs, on utilisera des concentrations de solutions acides comprises entre 5 et 20 N et de préférence entre 7 et 12 N (les rapports Si/Al de charpente sont déterminés par spectroscopie infra-rouge pour des rapports compris entre 10 et 40, et par RMN du $^{29}Si$ pour des rapports supérieurs). Il est possible de réaliser, au lieu d'une attaque en milieu concentré, plusieurs attaques en milieu dilué ; les fourchettes de conditions opératoires données ci-dessus illustrent simplement le cas où une seule attaque acide post-calcination est réalisée, sans limiter, pour autant, la portée de l'invention. Par ailleurs, pour atteindre des rapports Si/Al élevés, c'est-à-dire supérieurs à 40 et plus spécifiquement supérieurs à 60, on pourra recouvrir avantageusement à plusieurs cycles calcination sous vapeur d'eau-attaque acide optimisée. Il est important que l'attaque acide ne soit pas extrêmement sévère, car il y a, dans ces conditions, désalumination de la charpente sans recristallisation et, donc, formation de lacunes atomiques qui sont des points de fragilisation de la structure. La teneur en Na après attaque acide est généralement inférieure à 300 ppm et de préférence inférieure à 150 ppm.

La zéolithe peut être mise en forme par toutes les techniques connues de l'homme du métier. Elle peut en particulier être mélangée à une matrice généralement amorphe, par exemple à une poudre humide de gel d'alumine. Le mélange est ensuite forcé au travers d'une filière pour être extrudé. La teneur en zéolithe du solide ainsi obtenu est généralement comprise entre environ 0,5 et 99,99% et avantageusement comprise entre environ 40 et 90% poids par rapport à l'ensemble zéolithe et matrice. La mise en forme peut être réalisée avec d'autres matrices que l'alumine, telles que, par exemple la silice, la magnésie, les silice-alumine, les argiles naturelles (kaolin, bentonite) et par d'autres techniques que l'extrusion telles que le pastillage ou la dragéification. Ce liant utilisé, pouvant représenter 0,01 à 99,5% en poids du catalyseur, ne contient substantiellement pas de métaux, la teneur étant en général inférieure à 400 ppm. Ainsi de manière globale la quantité de métaux contenue par le catalyseur est habituellement inférieure à 500 ppm.

Les mordénites utilisées dans le cadre de la présente invention ont avantageusement un rapport atomique global Si/Al compris entre 10 et 60 permettant d'obtenir une bonne sélectivité en produits aromatiques et une stabilité améliorés.

Elles ont habituellement un volume de maille situé entre 2760 Å et 2730 Å (1Å = $10^{-10}$ m) et de préférence entre 2755 Å et 2735 Å.

La réaction de transformation du durène est en général réalisée en lit fixe à des températures variant entre 200°C et 500°C et de préférence entre 230°C et 450°C à des vitesses spatiales définies comme le rapport entre la masse de charge injectée par heure et la masse de catalyseur, variant entre 0,5 et 5 $h^{-1}$ et de préférence entre 1 et 4 $h^{-1}$. La réaction est effectuée en présence d'hydrogène avec des rapports molaires hydrogène sur mélange d'hydrocarbures variant entre 1 et 8 et de préférence entre 2 et 6, et une pression totale comprise entre 5 et 80 bar et de préférence entre 15 et 40 bar.

Les résultats sont exprimés après 10 h et après 200 h de fonctionnement, en :

$$\text{Conversion du durène(CD)} = \frac{M_{D\ charge} - M_{D\ recette}}{M_{D\ charge}} \times 100$$

avec

$M_{D\ charge} =$ masse de durène dans la charge

$M_{D\ recette} =$ masse de durène dans la recette

Les 2 principales réactions mises en oeuvre lors de cette transformation étant l'isomérisation et la transalkylation avec les xylènes rajoutés à la charge, on exprimera d'une part la

$$\text{Sélectivité en isomérisation (SI)} = \frac{(\Sigma\ \text{masses isodurène+préhnitène) dans la recette}}{\Sigma m\ \text{des produits}} \times 100$$

la somme de la masse des produits étant définie comme la masse de durène transformé, d'autre part

$$\text{Sélectivité en xylènes (SX)} = \frac{(\Sigma\ \text{masses des xylènes formés})}{\Sigma(\text{masse des produits})} \times 100$$

$$\text{Sélectivité en triméthylbenzène (STMB)} = \frac{\Sigma(\text{masse des TMB dans la recette})}{\Sigma(\text{masses des produits})} \times 100$$

$$\text{Sélectivité en craquage (S}_c) = \frac{\Sigma(\text{masses des C1} \rightarrow \text{C4 dans la recette})}{\Sigma(\text{masses des produits}).} \times 100$$

Pour ce qui est de l'isomérisation on donnera également les approches à l'équilibre sur l'isodurène ou 1235 tétraméthylbenzène et le prehnitène ou 1234 tétraméthylbenzène.

$$\text{AEID} = \frac{\text{Nombre de moles d'isodurène dans la recette}}{\text{Nombre de moles d'isodurène à l'équilibre à T°C}} \times 100$$

$$\text{AEP} = \frac{\text{Nombre de moles de prehnitène dans la recette}}{\text{Nombre de moles de prehnitène à l'équilibre à T°C.}} \times 100$$

5

Les exemples qui suivent définissent l'invention sans en limiter la portée.

EXEMPLE 1 : Préparation du catalyseur A conforme à l'invention.

La matière première utilisée pour préparer ce catalyseur est une mordénite petits pores de la Société Chimique de la Grande Paroisse, référencée Alite 150 ; sa formule chimique à l'état anhydre est Na, $AlO_2(SiO_2)_{5,5}$, sa capacité d'adsorption de benzène est de 1% en poids par rapport au poids de solide sec, et sa teneur en sodium de 5,3% en poids. Cinq cents grammes de cette poudre sont plongés dans une solution 2 M de nitrate d'ammonium, et la suspension est portée à 95°C pendant 2 heures. Le volume de la solution de nitrate d'ammonium engagée est égal à 4 fois le poids de zéolithe sèche (V/P = 4). Cette opération d'échange cationique est recommencée 3 fois. Après le 3ème échange, le produit est lavé à l'eau à 20°C pendant 20 minutes, avec un rapport V/P égal à 4. La teneur en sodium exprimée en pourcentage en poids par rapport à la zéolithe sèche passe de 5,5 à 0,18%.

Le solide est ensuite soumis à une calcination en atmosphère confinée à une température de l'ordre de 570°C pendant 2 heures. La pression partielle de vapeur d'eau à l'intérieur du réacteur est de l'ordre de 90%. La cristallinité du solide après cette étape de calcination est de l'ordre de 90%.

On procède ensuite à une attaque acide avec de l'acide nitrique 6,5 N. Au cours de cette attaque acide le solide est porté à reflux dans la solution d'acide nitrique pendant 2 heures, avec un rapport V/P (volume de solution acide par rapport au poids de la zéolithe exprimé en poids sec) égal à 8. Le produit est ensuite filtré puis lavé abondamment à l'eau distillée.

Les rapports atomiques Si/Al de charpente déterminés par RMN de $^{29}Si$ et Si/Al global déterminé par fluorescence X sont tous les 2 égaux à 50 et la teneur en Na est sensiblement égale à 100 ppm.

Ce solide ainsi modifié est ensuite mis en forme par malaxage avec un liant de type aluminique, à raison de 20% en poids de liant, puis passage au travers d'une filière. Les extrudés obtenus, de diamètre 1,2 mm, sont ensuite séchés et calcinés entre 150 et 500°C par palier d'une heure environ. La teneur en métaux, autre que le silicium et l'aluminium, généralement le fer en majeure partie, le titane et le zirconium est inférieure à 400 ppm.

Une charge, type essence, provenant par exemple de la transformation du méthanol est mise en mélange avec des xylènes dans la proportion 60% essence-40% xylène et le mélange dont la composition est donnée dans le tableau II est mis en contact avec de l'hydrogène circulant à co-courant en lit fixe en présence du catalyseur préparé ci-dessus dans les conditions suivantes :
T°C = 350°C et 400°C
ppH = 2
p = 20 bar
$H_2$/mélange = 4 (en moles).

La composition de l'effluent est donnée dans le tableau II. L'indice d'octane est substantiellement amélioré après transformation du durène. Les résultats catalytiques figurent dans le tableau III

## TABLEAU II

| | mélange hydrocarboné initial (% pds) | Effluent (% pds) |
|---|---|---|
| i.Pentane | 4,28 | 3,5 |
| n.Pentane | 0,74 | - |
| Pentènes | 12,04 | 5,6 |
| $C_6^+$ non aro | 13,32 | 7,2 |
| Benzène | 0,17 | 1,4 |
| Toluène | 0,97 | 10,26 |
| Ethylbenzène | 0,26 | 1,5 |
| Xylènes | 45,17* | 23,94 |
| $C_9^+$ aro | 3,68 | 35,6 |
| $C_{10}$ aro {Durène | 19,38 | 4,2 |
| Isodurène | 0 | 5,6 |
| Prehnitène | 0 | 1,2 |
| Indice d'octane | 100,6 | 108 |

\* dont 40 % de xylènes introduits.

EXEMPLE 2 : Catalyseur B conforme à l'invention.

Le catalyseur B diffère du catalyseur A en ce que l'étape de calcination en atmosphère confinée est effectuée à 540°C pendant 2 heures, toutes les autres conditions étant égales par ailleurs, et en ce que l'attaque acide est effectuée avec de l'acide nitrique 1,3 N. La teneur en Na après attaque acide est sensiblement égale à 140 ppm.

Les rapports Si/Al de charpente et globaux sont tous les deux égaux à 11.

Ce catalyseur est testé à 350°C et 400°C, ppH = 2, p = 20 bar, $H_2$/HC = 4 avec la même charge que celle utilisée dans l'exemple I. Les résultats obtenus figurent dans le tableau III.

EXEMPLE 3 : Catalyseur C conforme à l'invention.

Ce catalyseur diffère du catalyseur A décrit dans l'exemple 1 en ce que la matière première utilisée pour le préparer n'est plus la mordénite Alite 150 de la Société Chimique de la Grande Paroisse mais une mordénite larges pores de la Société Toyo Soda référencée TSZ 600 NAA. Sa formule chimique à l'état anhydre est Na, $AlO_2$, $(SiO_2)_{5,1}$, sa teneur en sodium de 5,7% et sa capacité d'adsorption du benzène est de 7%. Toutes les étapes d'échange, de calcination, d'attaque acide, de mise en forme et de calcination sont effectuées dans les mêmes conditions que celles décrites dans l'exemple 1. La teneur en Na après décationisation est sensiblement égale à 100 ppm. Les rapports atomiques Si/Al global et Si/Al de charpente sont tous les deux égaux à 55. Ce catalyseur est ensuite évalué pour la transformation du durène dans les mêmes conditions que celles décrites pour l'exemple 1. Les résultats catalytiques figurent dans le tableau III.

EP 0 350 367 B1

EXEMPLE 4 : Catalyseur D non conforme à l'invention.

La matière première utilisée pour préparer ce catalyseur est la mordénite larges pores de la société Toyo Soda référencée TSZ 600 NAA, de formule chimique Na AlO$_2$ (SiO$_2$)$_{5,1}$.

Après échange effectué selon le protocole décrit dans l'exemple 1, le solide est soumis à une calcination en atmosphère confinée à une température de 480°C pendant 2 heures, puis à une attaque acide, avec une solution d'acide nitrique 0,8 N. Les rapports Si/Al global et de charpente sont égaux à 7. Le catalyseur est ensuite mis en forme par extrusion, puis séché et calciné par paliers d'une heure environ entre 150 et 500°C. Il est ensuite testé pour la transformation du durène dans les conditions décrites dans les précédents exemples. Les performances catalytiques sont résumées dans le tableau III.

EXEMPLE 5 : Catalyseur E non conforme à l'invention.

Le catalyseur E diffère du catalyseur A décrit dans l'exemple 1 uniquement en ce que l'opération d'échange cationique est effectuée avec un rapport v/p de 8, autant de fois qu'il est nécessaire pour obtenir une teneur en sodium après échange sur le solide inférieure ou égale à 300 ppm, de plus l'étape de calcination en atmosphère confinée n'est pas suivie d'une attaque acide. Le rapport atomique Si/Al de charpente déterminé par RMN$^{29}$Si est égal à 50 et le rapport Si/Al global déterminé par fluorescence X est égal à 5,5. Ce solide est ensuite mis en forme, séché et calciné suivant les techniques décrites dans l'exemple 1. Ses performances figurent dans le tableau III. Après 200 heures de fonctionnement le catalyseur est très sélectif mais a perdu une grande partie de son activité.

EXEMPLE 6 non conforme à l'invention).

Le catalyseur A décrit dans l'exemple 1 est utilisé pour transformer le durène présent dans un mélange hydrocarboné comprenant 60% en poids d'essence ex transformation du méthanol et 40% en poids de toluène. Les résultats figurent dans le tableau III.

Pour obtenir des valeurs de conversion et de sélectivité sensiblement équivalentes, la température du procédé en présence de toluène doit être portée à 430°C. Par ailleurs, le catalyseur est moins actif et moins sélectif en présence de toluène.

EXEMPLE 7 : Catalyseur F à base de zéolithe Y conforme à l'invention.

Une zéolithe Y, ayant une teneur en sodium de 9,4% poids par rapport au poids de zéolithe sèche et un paramètre de maille de 24,68 × 10$^{-10}$ m est soumise à trois échanges successifs dans une solution de nitrate d'ammonium (NH$_4$NO$_3$) 2 M, à une température de 100°C puis à une calcination à 550°C, pendant 2 heures en atmosphère confinée. Elle subit ensuite un nouvel échange dans une solution de nitrate d'ammonium 2 M puis une attaque acide pendant 2 heures dans HCl 0,1 N. La teneur en sodium finale est de 0,05% poids par rapport au poids de solide sec, le paramètre cristallin de la maille est de 24,47 × 10$^{-10}$ m et le rapport atomique Si/Al est de 2,9. Cette zéolithe est ensuite malaxée avec un gel d'alumine préalablement peptisé par l'acide nitrique de manière à ce que la teneur en zéolithe du mélange obtenu soit de 40% poids par rapport au poids sec du mélange. La pâte est ensuite forcée dans une filière afin d'obtenir des extrudés de 1,5 millimètres de diamètre, qui sont ensuite séchés et calcinés à 550°C.

Le catalyseur F ainsi préparé est mis en contact avec la charge décrite dans l'exemple 1 et dans les mêmes conditions que celles décrites dans ce même exemple. Les performances de ce catalyseur figurent dans le tableau III, elles sont rapportées à la teneur en zéolithe.

EXEMPLE 8 : Catalyseur G à base de zéolithe L conforme à l'invention.

La zéolithe L brute de synthèse utilisée a une composition chimique moléculaire approchée K$_2$O, Al$_2$O$_3$, 6SiO$_2$, elle contient 14,4% en poids de potassium. Cette zéolithe subit trois échanges ioniques successifs dans des solutions de nitrate d'ammonium 10 N pendant 4 heures à l'ébullition, le rapport volume de solution sur poids de solide étant fixé à 4 cm$^3$ · g$^{-1}$. Après échanges, le produit est lavé à l'eau distillée, filtré et séché à 100°C pendant 12 heures ; sa teneur en potassium est alors de 3% en poids. La zéolithe échangée est traitée à 600°C sous vapeur d'eau pendant deux heures, attaquée dans une solution acide HCl 0,2 N à 100°C pendant quatre heures. A la suite de l'attaque acide elle subit une nouvelle calcination sous vapeur d'eau à 720°C pendant deux heures puis est finalement traitée dans une solution acide HCl 1,2 N à 100°C pendant 4 heures.

La zéolithe L sous forme acide obtenue à l'issue des traitements précédents a un rapport (Si/Al) atomique

8

égal à 15, sa teneur en potassium est inférieure à 0,2% poids, sa cristallinité DX déterminée par rapport au solide initial est supérieure à 75%, sa capacité d'adsorption de benzène mesurée à 30°C (P/Ps = 0,28) est supérieure à 12,2% poids.

Elle est ensuite malaxée avec un gel d'alumine peptisé au préalable par l'acide nitrique, la teneur pondérale en zéolithe du mélange est de 20%. La pâte obtenue est extrudée au travers d'une filière, de manière à obtenir des extrudés de 1,5 mm (1,5 × 10$^{-3}$ m) de diamètre environ. Ces extrudés sont ensuite séchés, puis calcinés à 550°C.

Le catalyseur G ainsi préparé est mis en contact avec la charge décrite dans l'exemple 1 et dans les mêmes conditions que celles décrites dans ce même exemple. Les performances de ce catalyseur figurent dans le tableau III.

TABLEAU III : Performances catalytiques

| Catalyseur exemples | A 1 | | | B 2 | | | C 3 | | | D 4 | | |
|---|---|---|---|---|---|---|---|---|---|---|---|---|
| T°C | 350 | 400 | 350 | 350 | 400 | 350 | 350 | 400 | 350 | 350 | 400 | 350 |
| t (en heures) | 10 | 10 | 200 | 10 | 10 | 200 | 10 | 10 | 200 | 10 | 10 | 200 |
| CD (%) | 50 | 82 | 50 | 66,2 | 78,2 | 62,8 | 48 | 82,2 | 48 | 35 | 70 | 15,2 |
| SI (%) | 63 | 17 | 53 | 40 | 25 | 50 | 65 | 13,6 | 60,1 | 46,7 | 20,2 | 88,0 |
| AEID (%) | 92 | 100 | 92 | 94,6 | 100 | 96 | 92 | 100 | 93 | 86,5 | 100 | 22,5 |
| AEP (%) | 66 | 74 | 66 | 73,8 | 70,0 | 68,3 | 66 | 77,8 | 64,7 | 65,2 | 60,8 | 55,3 |
| SX (%) | 16,4 | 52,1 | 25,2 | 35,2 | 51,9 | 31,2 | 14,1 | 55,1 | 17,2 | 25,4 | 52,2 | 9,7 |
| STMB (%) | 16,1 | 19,1 | 20,3 | 17,6 | 21,3 | 15,7 | 14,6 | 22,9 | 16,8 | 26,5 | 21,3 | 8,6 |
| SC (%) | 0,3 | 0,5 | 0,02 | 0,15 | 0,18 | 0 | 0,35 | 0,4 | 0,3 | 0,1 | 0,2 | 0 |

TABLEAU III (suite)

| Catalyseur exemples | E 5 | | | A 6 | | | F 7 | | | G 8 | | |
|---|---|---|---|---|---|---|---|---|---|---|---|---|
| T (°C) | 350 | 400 | 350 | 350 | 430 | 350 | 350 | 400 | 350 | 350 | 400 | 350 |
| t (en heures) | 10 | 10 | 200 | 10 | 10 | 200 | 10 | 10 | 200 | 10 | 10 | 200 |
| CD (%) | 50 | 80 | 10 | 35 | 82,0 | 35 | 48 | 80 | 46,5 | 50 | 81 | 48,5 |
| SI (%) | 65 | 20 | 85 | 75 | 17 | 65 | 60 | 18 | 62,1 | 63 | 18,3 | 60 |
| AEID (%) | 90 | 100 | 100 | 95 | 100 | 95 | 90 | 100 | 90 | 90 | 100 | 90 |
| AEP (%) | 68 | 72 | 65 | 66 | 72 | 66 | 65 | 72 | 65 | 68 | 71,5 | 65 |
| SX (%) | 14 | 60,6 | 7,3 | 11,6 | 50,5 | 15,7 | 18,2 | 58,6 | 18,0 | 14,4 | 55,7 | 18,1 |
| STMB (%) | 17,2 | 18,3 | 7,4 | 8,7 | 12,0 | 18,4 | 19,4 | 20,2 | 17,9 | 17,8 | 20,0 | 19,6 |
| SC (%) | 0,2 | 0,3 | 0 | 0,3 | 0,45 | 0,02 | 0,3 | 0,5 | 0,25 | 0,3 | 0,55 | 0,3 |

## Revendications

1. Procédé de transformation essentiellement par isomérisation, dismutation ou transalkylation d'une quantité substantielle de durène contenu dans un mélange d'hydrocarbures de point d'ébullition compris entre 30 et 300°C dans une zone réactionnelle dans laquelle on met en contact dans les conditions de la transformation ledit mélange, avec de l'hydrogène en présence d'un catalyseur, caractérisé en ce que ledit mélange comprend de 10 à 80% en poids de xylènes, en ce que le catalyseur renferme au moins une zéolithe choisie parmi la zéolithe Y, la zéolithe omega, la zéolithe L, la zéolithe bêta, les zéolithes de type MFI et de type ZSM20, l'offrétite et la mordénite et en ce qu'on récupère de ladite zone réactionnelle des hydrocarbures ne contenant sensiblement plus de durène.

2. Procédé selon la revendication 1 dans lequel on opère en présence d'un catalyseur comprenant de la mordénite de rapport atomique global Si/Al compris entre 8 et 100 et dont la teneur en sodium est inférieure à 300 ppm.

3. Procédé selon la revendication 1 dans lequel on opère en présence d'un catalyseur comprenant de la zéolithe L de rapport atomique Si/Al compris entre 3,0 et 50 et de préférence compris entre 10 et 40.

4. Procédé selon la revendication 1 dans lequel on opère en présence d'un catalyseur comprenant de la zéolithe Y de rapport atomique Si/Al compris entre 2,5 et 50 et de préférence compris entre 2,5 et 30.

5. Procédé selon la revendication 2 dans lequel ladite mordénite a un rapport atomique global Si/Al compris entre 10 et 60.

EP 0 350 367 B1

6. Procédé selon l'une des revendications 1 à 5 dans lequel ladite coupe hydrocarbonée comprend de 35 à 55% de xylènes.

7. Procédé selon l'une des revendications 1 à 6 dans lequel ladite coupe hydrocarbonée contient de 5 à 50% en poids de durène et de préférence de 10 à 35% en poids.

8. Procédé selon l'une des revendications 1 à 7 dans lequel on opère en lit fixe, avec injection d'hydrogène et dudit mélange à co-courant à une température comprise entre 200 et 500°C, à une vitesse spatiale comprise entre 0,5 et 5 h⁻¹, avec un rapport molaire hydrogène sur mélange d'hydrocarbures compris entre 1 et 8 et une pression totale comprise entre 5 et 80 bar.

9. Procédé selon l'une des revendications 1 à 8 dans lequel le catalyseur renferme une matrice choisie dans le groupe formé par les argiles naturelles, la magnésie, l' alumine, la silice et les silices alumines, représentant 0,01 à 99,5% en poids du catalyseur.

## Patentansprüche

1. Verfahren zur Umwandlung im wesentlichen durch Isomerisierung, Dismutation oder Transalkylierung einer beträchtlichen Menge von Durol, das in einem Kohlenwasserstoffgemisch mit einem Siedepunkt zwischen 30 und 300°C enthalten ist, in einer Reaktionszone, bei dem man das Gemisch unter den Umwandlungsbedingungen in Gegenwart eines Katalysators mit Wasserstoff in Kontakt bringt, dadurch gekennzeichnet, daß das Gemisch 10 bis 80 Gew.-% Xylole enthält, daß der Katalysator mindestens einen Zeolith, ausgewählt aus der Gruppe Y-Zeolith, Omega-Zeolith, L-Zeolith, β-Zeolith, der Zeolithe vom Typ MFI und vom Typ ZSM20, Offretit und/oder Mordenit enthält, und daß man die Kohlenwasserstoffe, die praktisch kein Durol mehr enthalten, aus dieser Reaktionszone zurückgewinnt.

2. Verfahren nach Anspruch 1, bei dem man in Gegenwart eines Katalysators arbeitet, der Mordenit mit einem Gesamt-Atomverhältnis Si/Al zwischen 8 und 100 und mit einem Natriumgehalt von weniger als 300 ppm enthält.

3. Verfahren nach Anspruch 1, bei dem man in Gegenwart eines Katalysators arbeitet, der L-Zeolith mit einem Atomverhältnis Si/Al zwischen 3,0 und 50, vorzugsweise zwischen 10 und 40, enthält.

4. Verfahren nach Anspruch 1, bei dem man in Gegenwart eines Katalysators arbeitet, der Y-Zeolith mit einem Atomverhältnis Si/Al zwischen 2,5 und 50, vorzugsweise zwischen 2,5 und 30, enthält.

5. Verfahren nach Anspruch 2, bei dem der Mordenit ein Gesamt-Atomverhältnis Si/Al zwischen 10 und 60 aufweist.

6. Verfahren nach einem der Ansprüche 1 bis 5, bei dem die Kohlenwasserstofffraktion 35 bis 55% Xylole enthält.

7. Verfahren nach einem der Ansprüche 1 bis 6, bei dem die Kohlenwasserstofffraktion 5 bis 50, vorzugsweise 10 bis 35 Gew.-% Durol enthält.

8. Verfahren nach einem der Ansprüche 1 bis 7, bei dem man in einem Festbett unter Einführung des Wasserstoffs und des Gemisches im Gegenstrom bei einer Temperatur zwischen 200 und 500°C mit einer Raumgeschwindigkeit zwischen 0,5 und 5 h⁻¹ bei einem Molverhältnis von Wasserstoff zum Kohlenwasserstoffgemisch zwischen 1 und 8 und einem Gesamtdruck zwischen 5 und 80 bar arbeitet.

9. Verfahren nach einem der Ansprüche 1 bis 8, bei dem der Katalysator einen Träger, ausgewählt aus der Gruppe der natürlichen Tone, Magnesia, Aluminiumoxid, Siliciumdioxid und der Aluminosilicate enthält, der 0,01 bis 99,5 Gew.-% des Katalysators ausmacht.

## Claims

1. Process for transformation essentially by isomerization, dismutation or transalkylation of a substantial of durene contained in a hydrocarbon charge having boiling point ranging from 30 to 300°C in a reaction zone in which said mixture is contacted under the conditions of the transformation with hydrogen in the presence of a catalyst, characterized in that said mixture comprises 10 to 80% in weight of xylenes, in that the catalyst contains at least one zeolite chosen from zeolite Y, zeolite omega, zeolite L, zeolite beta, MFI ans ZSM20-type zeolites, offretite and mordenite and in that hydrocarbons appreciably free of durene are recovered from said reaction zone.

2. Process according to claim 1 wherein the process is carried out in the presence of a catalyst comprising a mordenite having a Si/Al overall atomic ratio ranging from 8 to 100 and whose sodium content is less than 300 ppm.

3. Process according to claim 1 wherein the process is carried out in the presence of a catalyst comprising zeolite L having a Si/Al atomic ratio ranging from 3 to 50 and preferably ranging from 10 to 40.

4. Process according to claim 1 wherein the process is carried out in the presence of a catalyst comprising zeolite Y having a Si/Al atomic ratio ranging from 2.5 and 50 and preferably ranging from 2.5 to 30.

5. Process according to claim 2 wherein said mordenite has a Si/Al overall atomic ratio ranging from 10 to 60.

6. Process according to one claims 1 to 5 wherein said hydrocarbon cut comprises 35 to 55% of xylenes.

7. Process according to one of claims 1 to 6 wherein said hydrocarbon cut contains from 5 to 50% in weight of durene and preferably from 10 to 35% in weight.

8. Process according to one of claims 1 to 7 wherein the process is carried out on fixed beds with injection of hydrogen and said mixture in counter-current at a temperature ranging from 200 to 500°C, at a space velocity ranging from 0.5 to 5 $h^{-1}$, with a hydrogen to hydrocarbon mixture molar ratio ranging from 1 to 8 and a total pressure ranging from 5 to 80 bar.

9. Process according to one claims 1 to 8 wherein the catalyst contains a matrix chosen from the group formed by natural clays, magnesia, alumina, silica and alumina silicas, representing 0.01 to 99.5% in weight of catalyst.